# EUROPEAN PATENT SPECIFICATION

(11) **EP 2 885 607 B1**
(45) Date of publication and mention of the grant of the patent: **01.07.2020**
(21) Application number: 13834044.3
(22) Date of filing: 19.07.2013
(51) Int. Cl.: G01C 21/34, G01C 21/36

(54) **A METHOD AND SYSTEM FOR GPS BASED WATER LOGGING DETECTION AND NOTIFICATION**
VERFAHREN UND SYSTEM FÜR GPS-BASIERTE VERNÄSSUNGSERKENNUNG UND -MELDUNG
PROCÉDÉ ET SYSTÈME DE DÉTECTION ET DE NOTIFICATION D'ENGORGEMENT DE SOL BASÉS SUR LE SYSTÈME MONDIAL DE LOCALISATION (GPS)

(30) Priority: 14.08.2012 IN MM23672012
(43) Date of publication of application: 24.06.2015
(73) Proprietor: Tata Consultancy Services Limited, Mumbai 400 021 (IN)
(72) Inventor: DUTTA Choudhury, Anirban, West Bengal, Kolkata 700091 (IN); AGRAWAL, Amit Kumar, West Bengal, Kolkata 700091 (IN); SINHA, Priyanka, West Bengal, Kolkata 700091 (IN); BHAUMIK, Chirabrata, West Bengal, Kolkata 700091 (IN)
(74) Representative: Potter Clarkson
(86) International application number: PCT/IN2013/000453
(87) International publication number: WO 2014/033742

(56) References cited:
- US-A1- 2003 069 693
- US-A1- 2003 182 052
- US-A1- 2011 153 742
- US-A1- 2011 181 443
- STEPANOV, A ET AL.: 'Multi-objective evacuation routing in transportation networks' EUROPEAN JOURNAL OF OPERATIONAL RESEARCH (198) 2009, pages 435 - 446, XP026063463

## Description

The following specification particularly describes the application and the manner in which it is to be performed.

### FIELD OF THE INVENTION

The present invention relates to a method and system for detecting, analyzing and notifying a water logging condition on a road surface. More particularly, the invention provides a method and system for providing a real time map of an area during water logging condition and an all possible alternative routes to the user, during the water logging condition on the road surface.

### BACKGROUND OF THE INVENTION

Water logging typically refers to a situation in which there is a saturation of water at a particular area that may be a road surface or the area near the side of a road. This situation may occur frequently during rainy season or also may occur when there is any breakage of the water pipeline nearby. The problem due to water logging becomes more critical during rainy seasons, when the people are out of their houses, for some work and are unaware of the water logging situation on the road surface on which they are travelling.

The people suffering from the above mentioned situations are mostly pedestrians and sometimes the people travelling through their private vehicles like motorcycle, cars or even in the public transports like buses, auto-rickshaw's or taxies. During rainy season, there are various ways to make people aware about the current situation of the roads outside during heavy rainfall. The ways of awareness may include radio or television broadcast giving static or historic weather updates, the radio or television water logging alerts of the roads or sometimes even the historic data stored at some weather forecasting station may help.
All these ways of awareness mentioned has some or the other limitations, which majorly include that the ways of awareness mentioned, may not cover all the routes of the city and also the historic data updates delivered is not adaptive to current weather information. Secondly, the static water logging data or the semi-dynamic radio or TV water logging alerts covers only the major roads of the city, the other roads are excluded from the updates which sometimes may create problem to the people willing to do some work outside. Some of the existing method and systems known to us are as follows:
US6441748 to Takagi et al. "Road surface condition monitoring system using sensors disposed under the road", discloses a method and system for road surface monitoring system for monitoring the condition of a road surface that at least one sensor unit is provided in a sealed container disposed below the road surface which stores the already known or pre defined historic weather data.

Another patent application, PCT/AU2000/001416, "A method for providing up-to-date information on road flooding", discloses a method for providing up-to-date information on road flooding which includes a unit to be positioned at a flooding risk site and the unit having sensor means to detect water height above a predetermined position, sensor means to detect water flow speed and a communication means to communicate the sensor information, the server receiving sensor information from one or more said remote units and recording the information, and able to assign a geographical location to each unit via the unit identifying code means, the server able to provide consumers with up-to-date information as to whether a particular geographical location is closed by flooding. But the application doesn't give any mechanism for any alternative routing information with the area maps after detection of water logging or flood conditions. Document US 2011/181443 A1 (Dl) discloses systems and methods for providing event notification to navigational applications and devices. An event notification system determines whether to send application information to a navigation application or device based upon the proximity of the device to the event. In other embodiments, the event notification system sends all event information to the device and the device determines whether or not to display the information based upon the proximity of the event to the device. User interfaces for displaying event information to a user are also disclosed. Finally, system and methods are disclosed for providing disaster related information to service providers who, in turn, send the disaster information to users of personal navigation devices. For example, information provided may include evacuation routes, shelter locations, disaster recovery centers, hospitals, points of distribution, economic recovery locations, etc. Document US 2011/153742 A1 (D2) discloses methods and apparatuses, including computer program products, for conveying vehicle driving information. A hazard index indicating a level of driving safety is generated for a plurality of road segments. The generating comprises determining a hazard value for each of the plurality of road segments based on weather conditions data associated with the road segments, road conditions data associated with the road segments, and physical attributes of the road segments, and assigning the hazard value to the associated road segment. Location data associated with a remote device is received. Hazard information associated with one or more of the plurality of road segments and based on the location data and the hazard index is transmitted.

Hence there is a need for a method and system, which creates a real time water logging maps based on a global positioning system (GPS) information and making them accessible on the user's communication devices. Further, there is also a need for a method and system for providing provisions for selecting best alternate routes to the people in water logging condition on roads during rainfall.

### SUMMARY OF THE INVENTION

Before the present methods, systems, and hardware enablement are described, it is to be understood that this invention in not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention, which is defined by the appended claims.

The present invention provides a method and system for finding best possible alternate routes to the destination, provided by a user, during water logging condition in rainy season.

In an embodiment of the invention a method is provided for determining and displaying at least one least water logging prone route, from a source location to a destination location specified by a user, during a water logging condition in an area, according to claim 1.

In an embodiment of the invention a system is provided for determining and displaying at least one least water logging prone route, from a source location to a destination location specified by a user during a water logging condition in a particular area, according to claim 6.

### BRIEF DESCRIPTION OF THE DRAWINGS

The foregoing summary, as well as the following detailed description of preferred embodiments, is better understood when read in conjunction with the appended drawings. Drawings and illustrations described herein are intended to lay more emphasis on understanding the underlying principle of the invention. The manner in which the drawings are presented in no way limit the scope of the invention and the advantages one can garner from the embodiments of the present invention. In the drawings:
**Figure 1****:** shows a flow diagram of the process for water logging detection and displaying all the routes to a destination using a fusion engine.
**Figure 2****:** shows a flow diagram of water logging detection at the fusion engine.
**Figure 3****:** shows a system diagram for water logging detection and displaying all the routes to a destination using a fusion engine.
**Figure 4****:** shows a system diagram for process for water logging detection and displaying all the routes to a destination using a fusion engine.

### DETAILED DESCRIPTION OF THE INVENTION

Some embodiments of this invention, illustrating all its features, will now be discussed in detail.

The word water logging may be considered in similar reference to the word "waterloging" or "water-logging" and the like.

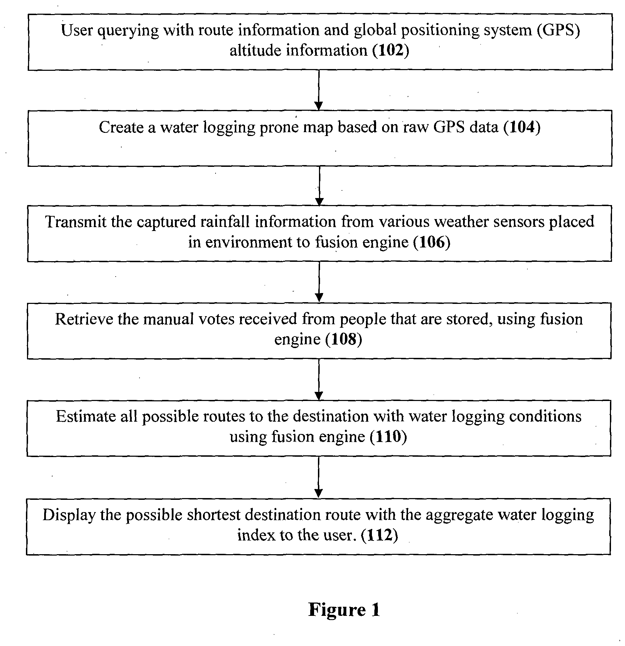

Referring to **Figure 1** is a flow diagram of the process for water logging detection and displaying all the routes to a destination using a fusion engine.

The process starts at the step **102,** in which a user provides a query with a route information and global positioning system information, for obtaining all the possible routes to a destination. The route information may be comprised of source information of the current location of the user and destination information to which user is willing to stop. At the step **104,** water logging prone map is created by using the information given by step **102.** At the step **106,** the rainfall information captured from a plurality of weather sensors that are placed in environment, is transmitted to a fusion engine. At the step **108,** the manual votes received from the people which are stored, is retrieved by the fusion engine. At the step **110,** the fusion engine estimates the entire possible route to the destination along with a water logging condition of all the estimated routes. The process ends at the step **112** in which the possible shortest destination route with aggregate water logging index is displayed on a portable communication device of the user.

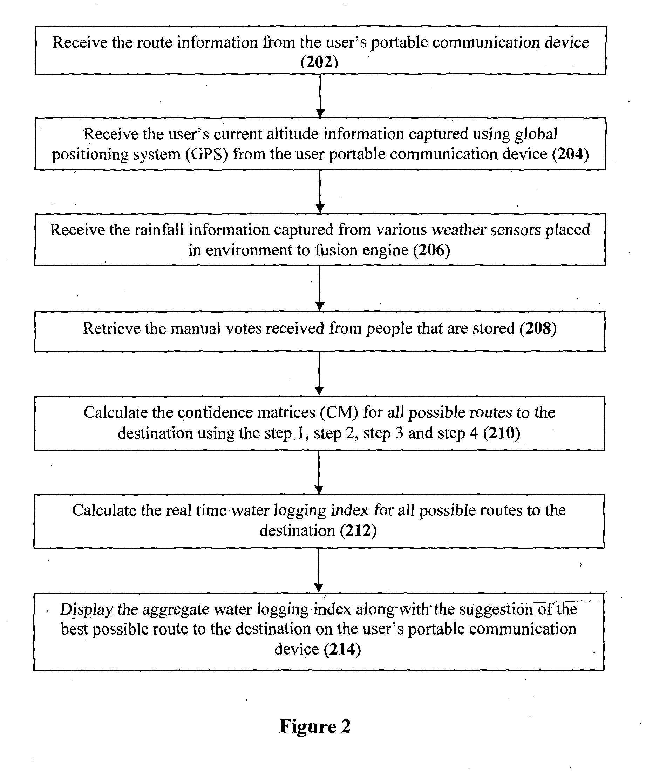

Referring to **Figure 2** is a flow diagram of water logging detection at the fusion engine.

The process starts at the step **202,** in which route information, which comprises of a source and destination information, is received at a fusion engine form a user's portable communication device. At the step **204,** the user's current altitude information, which is captured using the user's portable communication device, from a global positioning system (GPS), is received at the fusion engine. At the step **206,** rainfall information which is captured from a plurality of weather sensors placed in environment is received at the fusion engine. At the step **208,** the manual votes received from the people which are stored, is retrieved by the fusion engine. At the step **210,** a confidence matrix (CM) for all possible routes to the destination is calculated using the steps **202, 204, 206** and the step **208.** At the step **212,** a real time water logging index for all possible routes to the destination is calculated. The process ends at the step **214** in which an aggregate water logging index along with the suggestion of a best possible route to the destination is displayed on the user's portable communication device.

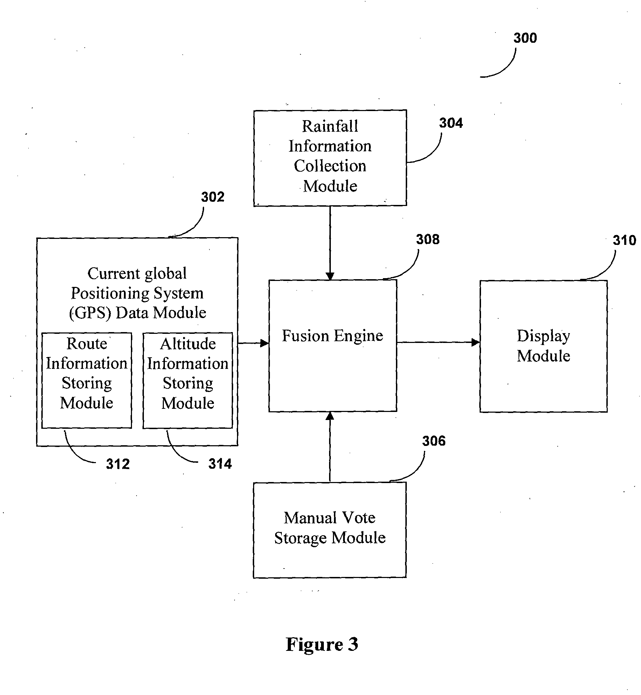

Referring to **Figure 3** is a system diagram for water logging detection and displaying all the routes to a destination using a fusion engine.

The system **(300)** for estimating and displaying all the routes to the destination using a fusion engine comprising a current global positioning system (GPS) data module **(302),** which further comprises of a route information storing module **(312)** and an altitude storing information module **(312),** a rainfall information collection module **(304),** a manual vote storage module **(306),** a fusion engine **(308)** and a display module **(310).**

The system and method of the present invention describes estimation of all the possible alternate routes to the destination prescribed by the user. It should be noted that following discussion only illustrates one of the procedures to be used. These procedure may need some modification, some parts may be added, removed or the process may be used iteratively while actual use. Some of the steps may involve offline work to be carried out. For example, storing of the rainfall information from a plurality of weather sensors placed in environment, hence this storing may be done offline. The information of these sensors is then retrieved for use during actual operation of the presented system and method. Similarly, the manual votes taken from various people are also stored in offline mode and then these votes are then used during actual operation of the presented system and method.

The current global positioning system (GPS) data module **(302)** is adapted to store the information which is to be given to the fusion engine **(308)** for processing. The current global positioning system (GPS) data module **(302)** further comprises of the route information storing module **(312)** and the altitude information storing module **(314).**

The route information storing module **(312)** is further adapted to store the current location information inputted by the user while querying for finding alternate routes. The information inputted by the user may include the current source location information and the destination information where user is supposed to reach.

The altitude information storing module **(314)** is further adapted to store the altitude information in order to determine the physical location of the user and then height of the user based on GPS altitude data. The information captured may disclose the geographic location of a user or attaining of the current position of user or disclosing the actual coordinates of the user. The GPS altitude information may be obtained using various ways which may include google maps, global positioning system (GPS), optical tracking or even global information systems or wearable tactical system (WTS) or a geographic information system (GIS) and the like.

The altitude information may be used to create a water logging prone map. GPS altitude information may be accumulated using mobile handheld devices like smart phones. The altitude part of the GPS data may be mapped with the location part of the GPS i.e. route of the journey. The rainfall information collection module **(304)** is adapted to store all the information captured from a plurality of weather sensors placed in the environment. The plurality of weather sensors are dynamic weather sensors which may be any one of a barometric sensor for measuring atmospheric pressure or a hygrometric sensor for measuring humidity or a rain gauge or rain witch or rain sensors for measuring precipitation over a set period of time or a disdromentric sensor for measuring a drop size distribution and the like. The manual vote storage module **(306)** is adapted to store the manual votes given by the various peoples may be based on their previous experiences related to water logging. The manual vote may also contain the history which will encompass historically known water-logging-prone zones for example static databases maintained by government/private agencies. These areas can be further refined to pin-point water logging hotspots. The fusion engine **(308)** is adapted to estimate all the possible routes with water logging hot spots and their respective confidence metrics (CM). The fusion engine is further adapted to calculate a real time aggregate water logging index for each of the estimated routes. The fusion engine further suggests quantitatively better route(s) to the end user. The Confidence matrices (CM) are calculated for water clogging hotspots. The matrix may contain two columns with normalized numbers and locations. The numbers demonstrate the probability of the water logging for that respective location. The CM are calculated based on the inputs which comprises of local minima detection, the rainfall information collection module **(304),** the manual vote storage module **(306).** The confidence matrices (CM) include the confidence scores for each route. The confidence score may be calculated by below mentioned two methods. In the first method, the severity of a waterloging prone zone may depend on two main factors viz. the range/length of the waterlogged area and the depth of the logged water. To quantify the confidence score for each low lying location detected, the area inside the low lying location is calculated using water reservoir principle. According to the water reservoir principle if the water is poured from top of a 2D curve, the cavity regions of the curve where water will be stored are considered as reservoirs. The area of this reservoir is a measure of the severity of the waterloging problem, and hence directly translates into the confidence score associated to the respective low lying location. While in the second method, approximation of the confidence score may be calculated by assuming that the low lying location is small enough and approximating the area of the low lying location by the area of the largest triangle which can fit into that low lying location. In order to achieve this, the immediate preceding and succeeding peaks for each low lying location may be detected. Then, for each low lying location, the nearest low altitude peak can be chosen and thus may form an isosceles triangle with its base horizontal to the distance axis. This triangle may effectively fills up the reservoir of the respective low lying location.

The local minima detection algorithm may be used to point out the severity of the water-logging-hot-spots in the particular region. For example, a range of 10 km road is historically known as water infested area. The distinctive local minima(s) in the altitude curve will be more prone to water logging in the entire route. The real time aggregate water logging index for each of the estimated routes is calculated. The display module **(310)** is adapted to display the real time aggregate water logging index for each of the estimated routes and further displays the suggested quantitatively better route(s) to the end user.

The display may be of any device from the group of devices which comprises of any hand held device or it may be installed in car or may be a desktop display.

The hand held device may be at least one of an enterprise digital assistant or a mobile computer or a mobile phone or tablet computer or a Smartphone or a personal navigation device or a pager or a cell phone or a laptop or a ultra-mobile PC or a pocket PC.

The user may comprise a pedestrian with Smartphone, a computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that user.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived there from, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The preceding description has been presented with reference to various embodiments. Persons skilled in the art and technology to which this application pertains will appreciate that alterations and changes in the described structures and methods of operation can be practiced without meaningfully departing from the scope of the invention as defined by the appended claims.

### WORKING EXAMPLE OF THE PRESENT INVENTION

In an exemplary embodiment of the present invention, method and system is provided for water logging detection and displaying all the routes to a destination using a fusion engine.

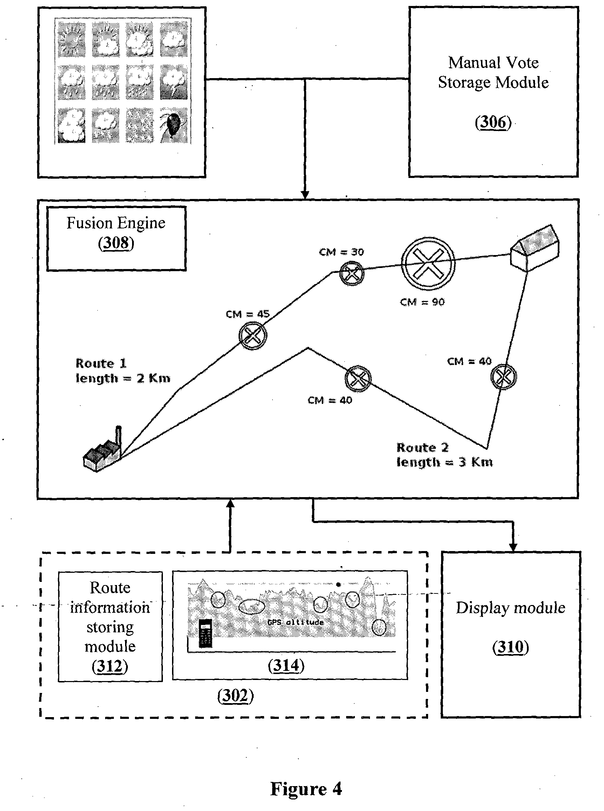

Referring to **Figure 4** is a system diagram for process for water logging detection and displaying all the routes to a destination using a fusion engine.

The water logging detection process starts with the current global positioning system (GPS) data module **(302)** which is adapted to store the input information for the fusion engine **(308)** for further processing. The user may capture the GPS altitude information through the portable communication device using altitude information storing module **(314).** The portable communication device may be selected from the group comprising of smart phones, laptop, tablet, PDA etc. The altitude information stored in altitude information storing module **(314)** of the GPS data is mapped with the location information stored in route information storing module **(312)** of the GPS i.e. route of the journey. Assisted GPS and other filtering methods are used to "snap" the data with streets.

In a typical rain infested region, the drainage system is not functional enough to evacuate the logged water in a reasonable time. It's most likely that in that region, lower the GPS location, higher is the probability of water logging. So a local minima detection algorithm may point out the severity of the water-logging-hot-spots in that region. The confidence matrices (CM) are calculated for water clogging hotspots inside a fusion engine **(308).** An input for confidence matrices calculation inside a fusion engine **(308)** includes Local minima detection from the fusion engine, multiple GPS data from different mobile devices are collected to build a normalized collection of available/popular GPS receivers, recent rainfall information which may include information of last 24-48 hour from dynamic weather sensors stored in rainfall information collection module **(304).** The manual vote storage module **(306)** encompasses information pertaining to the historically known water-logging-prone zones e.g. static databases maintained by government/private agencies. These areas may be further refined to pin-point water-logging hotspots. The manual vote storage module **(306)** by a participatory user will directly affect the present CM of that GPS location. E.g. manual voting may be used to rule out the decision of false positive(s).

The user sends the current GPS information stored in current global positioning system (GPS) data module **(302)** to the fusion engine **(308)** including route information (source and destination) and current GPS data i.e. current location stored in route information storing module **(312)** and altitude information altitude information storing module **(314).** This input is needed to determine the altitude difference of the end user E.g. pedestrian/small car or big car/bus (from the GPS altitude data). There might be water logging cases which a bus may ignore, but a pedestrian can not ignore. This may be an optional input. A static user does not need to send it. The user can still get the real-time waterlogging CM(s) for a certain route.

In return, the fusion engine output displays the possible route(s) with water logging hotspots and their respective CMs using display module **(310).** It also calculates a real-time aggregate water logging index for each of the routes and thus quantifies water logging information for all the routes. Thus, suggests quantitatively better route(s) to the end user. The calculated CM and aggregate water logging index is given in **Figure 4** with the displayed output on the display screen using display module **(310)** to the user, suggesting best possible route.

## Claims

1. A method for determining and displaying at least one least water logging prone route, from a source location to a destination location specified by a user, during a water logging condition in an area, comprising:
a) receiving, by at least one processor inside a fusion server, GPS location information obtained from at least one position sensor embedded in a portable communication device, wherein the GPS location information comprises coordinates of a source location and a destination location; and determining at least two routes from the source location to the destination location by the portable communication device;
b) receiving (206), by the fusion server, rainfall information captured from a plurality of dynamic weather sensors placed in the environment; determining at least one alternate route, from the at least two routes, from the source location to the destination location;
**characterized in that** it further comprises:
c) determining (210), by the fusion server, confidence matrices for all the routes starting from the source location of the user to the destination location, wherein the confidence matrices include confidence scores for the routes and the confidence scores are used to calculate a real time water logging index (212) for each route, wherein the confidence matrices for a route are determined based on:
i) the severity of water logging in a hot spot area on the route, wherein the hot spot area indicates an area which is prone to water logging, and wherein the severity of the water logging is indicative of how prone the hot spot area on the route is to water logging,
ii) the rainfall information from the plurality of dynamic weather sensors,
iii) a plurality of votes received from people (208) based on their previous experiences related to water-logging, and
iv) historical statistics of a plurality of known water logging prone areas on the route; and
d) displaying (214), by a display module (310) in the fusion server, on the portable communication device, an aggregate water logging index calculated from the real time water logging indices for the routes; and suggesting a best route to the destination location.

2. The method of claim 1, wherein the GPS location information comprises one of normalized statistical data pertaining to real-time water logging at the particular location collected from at least one participatory device and information pertaining to recent rain-fall captured from various dynamic rain sensors or a historical data set or the stored vote or a combination thereof, and wherein the at least one participatory device comprises a location sensor, and a communication means.

3. The method of claim 1, wherein the confidence matrices comprise normalized values and locations demonstrating the probability of the water logging for each respective location.

4. The method of claim 1, wherein a second set of data is quantified for each of the at least two routes and rendered on a display (310) of the portable communication device for the user.

5. The method of claim 2, wherein the dynamic rain sensors are at least one of a barometric sensor for measuring atmospheric pressure or an hygrometric sensor for measuring humidity or an rain gauge or rain switch or rain sensor for measuring precipitation over a set period of time or an disdromentric sensor for measuring a drop size distribution or combination thereof.

6. A system for determining and displaying at least one least water logging prone route, from a source location to a destination location specified by a user during a water logging condition in a particular area, comprises of:
a) a portable communication device, adapted to capture location information comprising coordinates of a source location and a destination location from at least one position sensor embedded in the portable communication device, and to determine at least two routes from the source location to the destination location, comprising:
b) at least one processor inside a fusion server operable to:
i) receive rainfall information captured from a plurality of dynamic weather sensors placed in the environment;
ii) determine at least one alternate route, from the at least two routes, from the source location to the destination;
iii) determine confidence matrices for all the routes starting from the source location of the user to the destination location, wherein the confidence matrices include confidence scores for the routes and the confidence scores are used to calculate a real time water logging index for each route, wherein the confidence matrices for a route are determined based on:
1) the severity of the water logging in a hot spot area on the route, wherein the hot spot area indicates an area which is prone to water logging, and wherein the severity of the water logging is indicative of how prone the hot spot area on the route is to water logging,
2) the rainfall information from the plurality of dynamic weather sensors,
3) a plurality of votes received from people based on their previous experiences related to water-logging, and
4) historical statistics of a plurality of known water logging prone areas on the route; and
iv) display, on the portable communication device, an aggregate water logging index calculated from the real time water logging indices for the routes and suggest a best route to the destination.

7. The system of claim 6, wherein the water logging is at least one of a saturation of the soil by groundwater or a saturation of water on the road due to rainfall or a saturation of water on the road due to flood or damaged drainage system or insufficient drainage system or combination thereof.

8. The system of claim 6, wherein the user is at least one of an operator of a vehicle or a pedestrian or a dispatcher or any independent entity.

9. The system of claim 6, wherein the location information is one of geographic location of a user, a current position of user, and actual coordinates of the user.

10. The system of claim 6, wherein the at least one route is provided to the user from the plurality of sets of collected information, wherein the at least one route depicts a visual representation of physical location of the user and water logging and/ or road conditions in an area of user, and wherein the at least one route comprises the possible routes with water logging condition.

11. An apparatus for determining and displaying at least one least water logging prone route, comprising:
a) a portable communication device;
b) an application embedded on a memory module of the portable communication device, wherein the memory module is communicatively coupled to the portable communication device and its mean for communication; and
c) at least one position sensor (302) embedded in the portable communication device, communicably connected to the application, adapted to:
i) receive rainfall information captured from a plurality of dynamic weather sensors placed in the environment;
ii) determine at least one alternate route, from the at least two routes, from the source location to the destination;
iii) determine confidence matrices (210) for all the routes starting from the source location of the user to the destination location, wherein the confidence matrices include confidence scores for the routes and the confidence scores are used to calculate a real time water logging index for each route, and wherein the confidence matrices for a route are determined based on:
1) the severity of the water logging in a hot spot area on the route, wherein the hot spot area indicates an area which is prone to water logging, and wherein the severity of the water logging is indicative of how prone the hot spot area on the route is to water logging,
2) the rainfall information from the plurality of dynamic weather sensors,
3) a plurality of votes received from people based on their previous experiences related to water-logging, and
4) historical statistics of a plurality of known water logging prone areas on the route; and
iv) display, on the portable communication device, an aggregate water logging index calculated from the real time water logging indices for the routes and suggest a best route to the destination.

12. The apparatus of claim 11, further comprising a remote fusion server that is connected to the portable communication device and application through the communication means.

13. The apparatus of claim 11, wherein the remote fusion server comprises a fusion engine module (308).

## Patentansprüche

1. Verfahren zum Bestimmen und Anzeigen von mindestens einer Route, bei der die geringste Gefahr von Vernässung besteht, von einem Ursprungsort zu einem Zielort, der von einem Benutzer angegeben wird, während einer Vernässungsbedingung in einem Gebiet, Folgendes umfassend:
a) Empfangen, durch mindestens einen Prozessor innerhalb eines Fusionsservers, von GPS-Ortsinformationen, die von mindestens einem Positionssensor erhalten werden, der in einem tragbaren Kommunikationsgerät eingebettet ist, wobei die GPS-Ortsinformationen Koordinaten eines Ursprungsortes und eines Zielortes umfassen; und Bestimmen von mindestens zwei Routen vom Ursprungsort zum Zielort durch das tragbare Kommunikationsgerät;
b) Empfangen (206), durch den Fusionsserver, von Niederschlagsinformationen, die von mehreren dynamischen Wettersensoren, die in der Umgebung angeordnet sind, erfasst wurden; Bestimmen mindestens einer alternativen Route aus den mindestens zwei Routen vom Ursprungsort zum Zielort; **dadurch gekennzeichnet, dass** es ferner Folgendes umfasst:
c) Bestimmen (210), durch den Fusionsserver, von Konfidenzmatrizen für alle Routen, die vom Ursprungsort des Benutzers beginnen, zum Zielort, wobei die Konfidenzmatrizen Konfidenzbewertungen für die Routen umfassen und die Konfidenzbewertungen verwendet werden, um einen Echtzeit-Vernässungsindex (212) für jede Route zu berechnen, wobei die Konfidenzmatrizen für eine Route auf Basis des Folgenden bestimmt werden:
i) dem Schweregrad der Vernässung in einem Brennpunktbereich auf der Route, wobei der Brennpunktbereich einen Bereich anzeigt, der anfällig für Vernässung ist, und wobei der Schweregrad der Vernässung anzeigt, wie anfällig der Brennpunktbereich auf der Route für Vernässung ist,
ii) den Niederschlagsinformationen von den mehreren dynamischen Wettersensoren,
iii) mehreren Bewertungen von Personen (208), basierend auf deren früheren Erfahrungen im Zusammenhang mit der Vernässung, und
iv) historischen Statistiken über mehrere bekannte vernässungsanfällige Gebiete auf der Route; und
d) Anzeigen (214), durch ein Anzeigemodul (310) im Fusionsserver, auf dem tragbaren Kommunikationsgerät, eines zusammengefassten Vernässungsindex, der aus den Echtzeit-Vernässungsindizes für die Routen berechnet wird, und Vorschlagen einer besten Route zum Zielort.

2. Verfahren nach Anspruch 1, wobei die GPS-Ortsinformationen eines von normalisierten statistischen Daten, die sich auf die Echtzeit-Vernässung am bestimmten Ort beziehen und die von mindestens einer teilnehmenden Vorrichtung gesammelt wurden, und Informationen, die sich auf den jüngsten Niederschlag beziehen, der von verschiedenen dynamischen Regensensoren oder einem historischen Datensatz oder der gespeicherten Bewertung oder einer Kombination davon erfasst wurde, umfassen, und wobei die mindestens eine teilnehmende Vorrichtung einen Ortssensor und eine Kommunikationseinrichtung umfasst.

3. Verfahren nach Anspruch 1, wobei die Konfidenzmatrizen normalisierte Werte und Orte umfassen, die die Wahrscheinlichkeit der Vernässung für jeden jeweiligen Ort zeigen.

4. Verfahren nach Anspruch 1, wobei ein zweiter Datensatz für jede der mindestens zwei Routen quantifiziert und auf einer Anzeige (310) des tragbaren Kommunikationsgeräts für den Benutzer dargestellt wird.

5. Verfahren nach Anspruch 2, wobei die dynamischen Regensensoren mindestens eines von einem barometrischen Sensor zur Messung des Atmosphärendrucks oder einem hygrometrischen Sensor zur Messung der Feuchtigkeit oder einem Regenmesser oder Regenschalter oder Regensensor zur Messung des Niederschlags über einen festgelegten Zeitraum oder einem disdromentrischen Sensor zur Messung einer Tropfengrößenverteilung oder einer Kombination davon sind.

6. System zum Bestimmen und Anzeigen von mindestens einer Route, bei der die geringste Gefahr für Vernässung besteht, von einem Ursprungsort zu einem Zielort, der von einem Benutzer während einer Vernässungsbedingung in einem bestimmten Gebiet angegeben wird, umfassend:
a) ein tragbares Kommunikationsgerät, das dafür ausgelegt ist, Ortsinformationen, die die Koordinaten eines Ursprungsortes und eines Zielortes umfassen, von mindestens einem in dem tragbaren Kommunikationsgerät eingebetteten Positionssensor zu erfassen und mindestens zwei Routen von dem Ursprungsort zu dem Zielort zu bestimmen, umfassend:
b) mindestens einen Prozessor innerhalb eines Fusionsservers, der für Folgendes betrieben werden kann:
i) Erhalten von Niederschlagsinformationen, die von mehreren in der Umgebung angeordneten dynamischen Wettersensoren erfasst werden;
ii) Bestimmen mindestens einer alternativen Route aus den mindestens zwei Routen vom Ursprungsort zum Zielort;
iii) Bestimmen von Konfidenzmatrizen für alle Routen, die vom Ursprungsort des Benutzers zum Zielort verlaufen, wobei die Konfidenzmatrizen Konfidenzbewertungen für die Routen umfassen und wobei die Konfidenzbewertungen verwendet werden, um einen Echtzeit-Vernässungsindex für jede Route zu berechnen, wobei die Konfidenzmatrizen für eine Route auf Basis des Folgenden bestimmt werden:
1) dem Schweregrad der Vernässung in einem Brennpunktbereich auf der Route, wobei der Brennpunktbereich einen Bereich anzeigt, der anfällig für Vernässung ist, und wobei der Schweregrad der Vernässung anzeigt, wie anfällig der Brennpunktbereich auf der Route für Vernässung ist,
2) den Niederschlagsinformationen von den mehreren dynamischen Wettersensoren,
3) mehreren Bewertungen von Personen, basierend auf deren früheren Erfahrungen im Zusammenhang mit der Vernässung, und
4) historischen Statistiken über mehrere bekannte vernässungsanfällige Gebiete auf der Route; und
iv) Anzeigen, auf dem tragbaren Kommunikationsgerät, eines zusammengefassten Vernässungsindex, der aus den Echtzeit-Vernässungsindizes für die Routen berechnet wird, und Vorschlagen einer besten Route zum Zielort.

7. System nach Anspruch 6, wobei die Vernässung mindestens eines von einer Sättigung des Bodens durch Grundwasser oder einer Sättigung von Wasser auf der Straße aufgrund von Regenfällen oder einer Sättigung von Wasser auf der Straße aufgrund von Überschwemmung oder beschädigtem Entwässerungssystem oder unzureichendem Entwässerungssystem oder einer Kombination davon ist.

8. System nach Anspruch 6, wobei der Benutzer mindestens eines von einem Fahrzeugführer oder einem Fußgänger oder einem Fahrdienstleiter oder einer unabhängigen Einheit ist.

9. System nach Anspruch 6, wobei die Ortsinformation den geographischen Standort eines Benutzers, die aktuelle Position des Benutzers und die tatsächlichen Koordinaten des Benutzers enthält.

10. System nach Anspruch 6, wobei die mindestens eine Route dem Benutzer aus den mehreren Sätzen gesammelter Informationen zur Verfügung gestellt wird, wobei die mindestens eine Route eine visuelle Darstellung des physischen Standorts des Benutzers und der Vernässungs- und/oder Straßenbedingungen in einem Gebiet des Benutzers darstellt, und wobei die mindestens eine Route die möglichen Routen mit Vernässungsbedingungen umfasst.

11. Vorrichtung zum Bestimmen und Anzeigen mindestens einer Route, die am wenigsten zur Vernässung neigt, umfassend:
a) ein tragbares Kommunikationsgerät;
b) eine Anwendung, die auf einem Speichermodul des tragbaren Kommunikationsgeräts eingebettet ist, wobei das Speichermodul kommunikativ mit dem tragbaren Kommunikationsgerät und dessen Kommunikationseinrichtung gekoppelt ist; und
c) mindestens einen in das tragbare Kommunikationsgerät eingebetteten Positionssensor (302), der kommunikativ mit der Anwendung verbunden ist und für Folgendes ausgelegt ist:
i) Erhalten von Niederschlagsinformationen, die von mehreren in der Umgebung angeordneten dynamischen Wettersensoren erfasst werden;
ii) Bestimmen mindestens einer alternativen Route aus den mindestens zwei Routen vom Ursprungsort zum Zielort;
iii) Bestimmen von Konfidenzmatrizen (210) für alle Routen, die vom Ursprungsort des Benutzers zum Zielort verlaufen, wobei die Konfidenzmatrizen Konfidenzbewertungen für die Routen umfassen und wobei die Konfidenzbewertungen verwendet werden, um einen Echtzeit-Vernässungsindex für jede Route zu berechnen, und wobei die Konfidenzmatrizen für eine Route auf Basis des Folgenden bestimmt werden:
1) dem Schweregrad der Vernässung in einem Brennpunktbereich auf der Route, wobei der Brennpunktbereich einen Bereich anzeigt, der anfällig für Vernässung ist, und wobei der Schweregrad der Vernässung anzeigt, wie anfällig der Brennpunktbereich auf der Route für Vernässung ist,
2) den Niederschlagsinformationen von den mehreren dynamischen Wettersensoren,
3) mehreren Bewertungen von Personen, basierend auf deren früheren Erfahrungen im Zusammenhang mit der Vernässung, und
4) historischen Statistiken über mehrere bekannte vernässungsanfällige Gebiete auf der Route; und
iv) Anzeigen, auf dem tragbaren Kommunikationsgerät, eines zusammengefassten Vernässungsindex, der aus den Echtzeit-Vernässungsindizes für die Routen berechnet wird, und Vorschlagen einer besten Route zum Zielort.

12. Vorrichtung nach Anspruch 11, ferner umfassend einen entfernten Fusionsserver, der mit dem tragbaren Kommunikationsgerät und der Anwendung über die Kommunikationseinrichtung verbunden ist.

13. Vorrichtung nach Anspruch 11, wobei der entfernte Fusionsserver ein Fusionsmaschinenmodul (308) umfasst.

## Revendications

1. Procédé destiné à déterminer et afficher au moins un itinéraire le moins sujet à l'engorgement, d'un emplacement source à un emplacement de destination spécifié par un usager, pendant une condition d'engorgement dans une zone, comprenant :
a) la réception, par au moins un processeur à l'intérieur d'un serveur de fusion, d'informations d'emplacement GPS obtenues à partir d'au moins un capteur de position embarqué dans un dispositif de communication portable, dans lequel les informations d'emplacement GPS comprennent les coordonnées d'un emplacement source et d'un emplacement de destination ; et la détermination d'au moins deux itinéraires de l'emplacement source à l'emplacement de destination par le dispositif de communication portable ;
b) la réception (206), par le serveur de fusion, d'informations sur les précipitations capturées à partir d'une pluralité de capteurs météorologiques dynamiques placés dans l'environnement ; la détermination d'au moins un itinéraire alternatif, parmi lesdits au moins deux itinéraires, de l'emplacement source à l'emplacement de destination ; **caractérisé en ce qu'**il comprend en outre :
c) la détermination (210), par le serveur de fusion, de matrices de confiance pour tous les itinéraires commençant à partir de l'emplacement source de l'usager jusqu'à l'emplacement de destination, les matrices de confiance comportant des scores de confiance pour les itinéraires et les scores de confiance étant utilisés pour calculer un indice d'engorgement en temps réel (212) pour chaque itinéraire, les matrices de confiance pour un itinéraire étant déterminées sur la base :
i) de la gravité de l'engorgement dans une zone de points chauds sur l'itinéraire, la zone de points chauds indiquant une zone qui est sujette à l'engorgement, et la gravité de l'engorgement indiquant dans quelle mesure la zone de points chauds sur l'itinéraire est sujette à l'engorgement,
ii) des informations sur les précipitations provenant de la pluralité de capteurs météorologiques dynamiques,
iii) d'une pluralité de votes reçus de personnes (208) sur la base de leurs expériences antérieures liées à l'engorgement, et
iv) de statistiques historiques d'une pluralité de zones sujettes à l'engorgement connues sur l'itinéraire ; et
d) l'affichage (214), par un module d'affichage (310) dans le serveur de fusion, sur le dispositif de communication portable, d'un indice d'engorgement global calculé à partir des indices d'engorgement en temps réel pour les itinéraires, et la suggestion d'un meilleur itinéraire jusqu'à l'emplacement de destination.

2. Procédé selon la revendication 1, dans lequel les informations d'emplacement GPS comprennent l'une des données statistiques normalisées relatives à l'engorgement en temps réel à l'emplacement particulier collectées à partir d'au moins un dispositif participatif et des informations relatives aux récentes précipitations capturées à partir de divers capteurs de pluie dynamiques ou d'un ensemble de données historiques ou du vote stocké ou d'une combinaison de ceux-ci, et dans lequel ledit au moins un dispositif participatif comprend un capteur d'emplacement, et un moyen de communication.

3. Procédé selon la revendication 1, dans lequel les matrices de confiance comportent des valeurs normalisées et des emplacements démontrant la probabilité de l'engorgement pour chaque emplacement respectif.

4. Procédé selon la revendication 1, dans lequel un second ensemble de données est quantifié pour chacun desdits au moins deux itinéraires et rendu sur un affichage (310) du dispositif de communication portable pour l'usager.

5. Procédé selon la revendication 2, dans lequel les capteurs de pluie dynamiques sont au moins l'un d'un capteur barométrique destiné à mesurer la pression atmosphérique ou d'un capteur hygrométrique destiné à mesurer l'humidité ou d'un pluviomètre ou d'un commutateur de pluie ou d'un capteur de pluie destiné à mesurer les précipitations sur une période de temps définie ou d'un capteur disdrométrique destiné à mesurer une distribution de taille de goutte ou une combinaison de ceux-ci.

6. Système destiné à déterminer et afficher au moins un itinéraire le moins sujet à l'engorgement, d'un emplacement source à un emplacement de destination spécifié par un usager pendant une condition d'engorgement dans une zone particulière, qui se compose :
a) d'un dispositif de communication portable, conçu pour capturer des informations d'emplacement comprenant les coordonnées d'un emplacement source et d'un emplacement de destination à partir d'au moins un capteur de position embarqué dans le dispositif de communication portable, et pour déterminer au moins deux itinéraires de l'emplacement source à l'emplacement de destination, comprenant :
b) au moins un processeur à l'intérieur d'un serveur de fusion pouvant être utilisé pour :
i) recevoir des informations sur les précipitations capturées à partir d'une pluralité de capteurs météorologiques dynamiques placés dans l'environnement ;
ii) déterminer au moins un itinéraire alternatif, à partir desdits au moins deux itinéraires, de l'emplacement source à la destination ;
iii) déterminer des matrices de confiance pour tous les itinéraires commençant à partir de l'emplacement source de l'usager jusqu'à l'emplacement de destination, les matrices de confiance comportant des scores de confiance pour les itinéraires et les scores de confiance étant utilisés pour calculer un indice d'engorgement en temps réel pour chaque itinéraire, les matrices de confiance pour un itinéraire étant déterminées sur la base :
1) de la gravité de l'engorgement dans une zone de points chauds sur l'itinéraire, la zone de points chauds indiquant une zone qui est sujette à l'engorgement, et de la gravité de l'engorgement indiquant dans quelle mesure la zone de points chauds sur l'itinéraire est sujette à l'engorgement,
2) des informations sur les précipitations provenant de la pluralité de capteurs météorologiques dynamiques,
3) d'une pluralité de votes reçus de personnes sur la base de leurs expériences antérieures liées à l'engorgement, et
4) de statistiques historiques d'une pluralité de zones sujettes à l'engorgement connues sur l'itinéraire ; et
iv) afficher, sur le dispositif de communication portable, un indice d'engorgement global calculé à partir des indices d'engorgement en temps réel pour les itinéraires, et suggérer un meilleur itinéraire jusqu'à la destination.

7. Système selon la revendication 6, dans lequel l'engorgement est au moins l'une d'une saturation du sol par les eaux souterraines ou d'une saturation de l'eau sur la route en raison des précipitations ou d'une saturation de l'eau sur la route en raison d'une inondation ou d'un système de drainage endommagé ou d'un système de drainage insuffisant ou d'une combinaison de ceux-ci.

8. Système selon la revendication 6, dans lequel l'usager est au moins l'un d'un opérateur d'un véhicule ou d'un piéton ou d'un expéditeur ou de toute entité indépendante.

9. Système selon la revendication 6, dans lequel les informations d'emplacement sont l'un d'un emplacement géographique d'un usager, d'une position actuelle de l'usager et des coordonnées réelles de l'usager.

10. Système selon la revendication 6, dans lequel ledit au moins un itinéraire est fourni à l'usager à partir de la pluralité d'ensembles d'informations collectées, ledit moins un itinéraire illustrant une représentation visuelle de l'emplacement physique de l'usager et de l'engorgement et/ou des conditions routières dans une zone de l'usager, et ledit au moins un itinéraire comprenant les itinéraires possibles avec une condition d'engorgement.

11. Appareil destiné à déterminer et afficher au moins un itinéraire le moins sujet à l'engorgement, comprenant :
a) un dispositif de communication portable ;
b) une application embarquée sur un module de mémoire du dispositif de communication portable, le module de mémoire étant couplé de façon à communiquer avec le dispositif de communication portable et son moyen de communication ; et
c) au moins un capteur de position (302) embarqué dans le dispositif de communication portable, connecté de manière communicante à l'application, conçu pour :
i) recevoir des informations sur les précipitations capturées à partir d'une pluralité de capteurs météorologiques dynamiques placés dans l'environnement ;
ii) déterminer au moins un itinéraire alternatif, à partir desdits au moins deux itinéraires, de l'emplacement source à la destination ;
iii) déterminer des matrices de confiance (210) pour tous les itinéraires commençant à partir de l'emplacement source de l'usager jusqu'à l'emplacement de destination, les matrices de confiance comportant des scores de confiance pour les itinéraires et les scores de confiance étant utilisés pour calculer un indice d'engorgement en temps réel pour chaque itinéraire, et les matrices de confiance pour un itinéraire étant déterminées sur la base :
1) de la gravité de l'engorgement dans une zone de points chauds sur l'itinéraire, la zone de points chauds indiquant une zone qui est sujette à l'engorgement, et de la gravité de l'engorgement indiquant dans quelle mesure la zone de points chauds sur l'itinéraire est sujette à l'engorgement,
2) des informations sur les précipitations provenant de la pluralité de capteurs météorologiques dynamiques,
3) d'une pluralité de votes reçus de personnes sur la base de leurs expériences antérieures liées à l'engorgement, et
4) de statistiques historiques d'une pluralité de zones sujettes à l'engorgement connues sur l'itinéraire ; et
iv) afficher, sur le dispositif de communication portable, un indice d'engorgement global calculé à partir des indices d'engorgement en temps réel pour les itinéraires, et suggérer un meilleur itinéraire jusqu'à la destination.

12. Appareil selon la revendication 11, comprenant en outre un serveur de fusion à distance qui est connecté au dispositif de communication portable et à l'application par le biais du moyen de communication.

13. Appareil selon la revendication 11, dans lequel le serveur de fusion à distance comprend un module de moteur de fusion (308).
